# EUROPEAN PATENT APPLICATION

(11) **EP 4 786 644 A1**
(43) Date of publication of application: **05.08.2026**
(21) Application number: 24872407.2
(22) Date of filing: 26.09.2024
(51) Int. Cl.: C23C 26/00, B32B 7/025, B32B 15/08, H01F 1/147, H01F 27/245, H01F 41/02, H02K 1/18, C21D 8/12

(54) **ELECTRICAL STEEL SHEET WITH ADHESIVE COATING FILM, LAMINATED CORE, AND METHODS FOR MANUFACTURING THOSE**

(30) Priority: 26.09.2023 JP 2023163616
(71) Applicant: Nippon Steel Corporation, Tokyo 100-8071 (JP); Nippon Carbide Industries Co., Inc., Tokyo 108-8466 (JP)
(72) Inventor: FUKUCHI Minako, Tokyo 100-8071 (JP); TAKEDA Kazutoshi, Tokyo 100-8071 (JP); OGAWA Hiroaki, Namerikawa-shi, Toyama 936-8555 (JP); FUKUDA Tatsuki, Namerikawa-shi, Toyama 936-8555 (JP)
(74) Representative: Vossius & Partner Patentanwälte Rechtsanwälte mbB
(86) International application number: PCT/JP2024/034457
(87) International publication number: WO 2025/070622

(57) **Abstract**

This adhesive surface-coated electrical steel sheet includes an electrical steel sheet and an adhesive coating provided on at least a part of one surface or both surfaces of the electrical steel sheet. The adhesive coating includes a (meth)acrylic resin particle A containing a configurational unit derived from a monomer having a self-crosslinking group, and a water-soluble (meth)acrylic resin B, and the adhesive coating has a weight-average molecular weight of 150,000 to 250,000.

## Description

### TECHNICAL FIELD

The present disclosure relates to an adhesive surface-coated electrical steel sheet, a laminated core, and methods for manufacturing those.

The present application claims priority based on Japanese Patent Application No. 2023-163616 filed in Japan on September 26, 2023, the contents of which are incorporated herein by reference.

### BACKGROUND ART

Conventionally, a "laminated core" in which a plurality of electrical steel sheets are laminated to each other has been used as a core used in a rotary electric machine and the like. The plurality of electrical steel sheets are fixed by a method such as welding, crimping, bolting, or bonding.

However, when the plurality of electrical steel sheets are fixed by the method such as welding, crimping, or bolting, mechanical stress, thermal stress, interlayer short-circuiting, and the like are likely to occur during processing. Therefore, the magnetic characteristics of the electrical steel sheet deteriorate, and the performance of the laminated core is unlikely to be sufficiently exhibited.

On the other hand, when the plurality of electrical steel sheets are fixed by bonding, adhesive surface-coated electrical steel sheets are used, and adhesive coatings are cured through heating and pressing to develop adhesiveness, thereby bonding the plurality of electrical steel sheets to each other.

When the plurality of electrical steel sheets are fixed using the adhesive surface-coated electrical steel sheets, mechanical stress, thermal stress, interlayer short-circuiting, and the like are less likely to occur during the processing. Therefore, the magnetic characteristics of the electrical steel sheet are less likely to deteriorate, and the performance of the laminated core is likely to be sufficiently exhibited.

In view of such advantageous effects, various technologies have been studied for fixing the plurality of electrical steel sheets by bonding.

For example, Patent Document 1 discloses "an adhesive surface-coated electrical steel sheet having, on a surface thereof, an insulating coating that develops adhesiveness through heating and/or pressing, the coating being a mixture in which an epoxy resin or a modified epoxy resin having a glass transition temperature (Tg) of 80°C to 150°C, an epoxy resin curing agent, and a particulate polymer having a particle size of 0.01 µm to 0.5 µm are dispersed".

In addition, Patent Document 2 discloses "an electrical steel sheet laminated body including a plurality of electrical steel sheets and a fusion-bonding layer positioned between the plurality of electrical steel sheets, in which the fusion-bonding layer contains a polyethylene acrylate including a repeating unit represented by Chemical Formula 1 and a repeating unit represented by Chemical Formula 2, and the polyethylene acrylate contains 65 to 90 weight% of the repeating unit represented by Chemical Formula 1 and 10 to 35 weight% of the repeating unit represented by Chemical Formula 2".

In addition, Patent Document 3 discloses "an electrical steel sheet for lamination, including an electrical steel sheet and an adhesive insulating coating provided on at least one surface of the electrical steel sheet, the adhesive insulating coating having a Martens hardness (HM) of 50 or more and less than 500".

In addition, Patent Document 4 discloses "an electrical steel strip or electrical steel sheet provided, on one planar surface thereof, with at least one thermosetting baking enamel layer including an epoxy resin as a main component, at least one curing agent, and at least one filler, in which the filler of the baking enamel layer contains a metal carbonate, a metal sulfate, a metal sulfide, a metal silicate, or a metal phosphate, or any mixture composed of a plurality thereof".

In addition, Patent Document 5 discloses "an electrical steel sheet with an insulating coating, having a heat-resistant adhesive insulating coating on one or both surfaces of the electrical steel sheet, in which the heat-resistant adhesive insulating coating contains 10 mass% or more of a polycarbonate urethane resin having a softening point of 20°C to 200°C, and 10 to 1000 parts by mass of a phenol resin with respect to 100 parts by mass of the polycarbonate urethane resin".

### Citation List

### Patent Documents

Patent Document 1: PCT International Publication No. WO2004/070080
Patent Document 2: Published Japanese Translation No. 2023-508140 of the PCT International Publication
Patent Document 3: PCT International Publication No. WO2016/017132
Patent Document 4: Published Japanese Translation No. 2018-518591 of the PCT International Publication
Patent Document 5: Japanese Unexamined Patent Application, First Publication No. 2017-179233

### SUMMARY OF INVENTION

### Technical Problem

However, in the prior arts including Patent Documents 1 to 5, a phenomenon has occurred in which the magnetic characteristics of the electrical steel sheet deteriorate when the adhesion strength of the adhesive coating is increased. That is, the adhesion strength of the adhesive coating and the magnetic characteristics of the electrical steel sheet are in a trade-off relationship, and it is difficult to satisfy both. In particular, it is required to ensure the adhesion strength of the adhesive surface-coated electrical steel sheet at ambient temperature and high temperature.

Therefore, in an adhesive surface-coated electrical steel sheet, further improvements are desired in terms of the adhesion strength at ambient temperature and high temperature, and the magnetic characteristics.

An object of the present disclosure is to provide an adhesive surface-coated electrical steel sheet having excellent adhesion strength at ambient temperature and high temperature, and excellent magnetic characteristics, a laminated core using the same, and methods for manufacturing those.

### Solution to Problem

Specific means for solving the problem include the following aspects.
<1> An adhesive surface-coated electrical steel sheet according to an aspect of the present disclosure includes: an electrical steel sheet; and an adhesive coating provided on at least a part of one surface or both surfaces of the electrical steel sheet, in which the adhesive coating includes a (meth)acrylic resin particle A containing a configurational unit derived from a monomer having a self-crosslinking group, and a water-soluble (meth)acrylic resin B, and a weight-average molecular weight of the adhesive coating is 150,000 to 250,000.
<2> In the adhesive surface-coated electrical steel sheet according to <1>, a weight-average molecular weight of a sol fraction of the adhesive coating after heating the adhesive coating at 200°C for 5 minutes may be 50,000 to 100,000.
<3> In the adhesive surface-coated electrical steel sheet according to <1> or <2>, the water-soluble (meth)acrylic resin B may be a (meth)acrylic resin containing a configurational unit derived from a monomer having a self-crosslinking group.
<4> In the adhesive surface-coated electrical steel sheet according to any of <1> to <3>, the ratio of the mass of the (meth)acrylic resin particle A to the mass of the water-soluble (meth)acrylic resin B may be 95/5 to 85/15.
<5> In the adhesive surface-coated electrical steel sheet according to any of <1> to <4>, in which the self-crosslinking group of the (meth)acrylic resin particle A may be at least one selected from the group consisting of an N-methylol group, an N-butylol group, and a glycidyl group.
<6> A laminated core according to an aspect of the present disclosure, including a plurality of the adhesive surface-coated electrical steel sheet according to any of <1> to <5> laminated, in which the electrical steel sheets are bonded to each other by a cured coating of the adhesive coating.
<7> The laminated core according to <6>, in which the laminated core may have a space factor of 96% to 98%.
<8> A method for manufacturing an adhesive surface-coated electrical steel sheet according to an aspect of the present disclosure is a method for manufacturing the adhesive surface-coated electrical steel sheet according to <1>, the method including:
   a coating step of coating at least a part of one surface or both surfaces of an electrical steel sheet with an adhesive coating-forming coating liquid containing a (meth)acrylic resin particle A containing a configurational unit derived from a monomer having a self-crosslinking group and a water-soluble (meth)acrylic resin B to obtain a coated steel sheet; and
   a coating-forming step of heating the coated steel sheet to a drying temperature of 100°C to 200°C at a heating rate of 6.0°C/sec or less, retaining the coated steel sheet within a temperature range from (drying temperature - 10°C) to the drying temperature for 10 to 90 seconds, and drying the coated steel sheet, to form an adhesive coating on the one surface or each of the both surfaces of the electrical steel sheet.
<9> In the method for manufacturing the adhesive surface-coated electrical steel sheet according to <8>, in the adhesive coating-forming coating liquid, the ratio of the mass of the (meth)acrylic resin particle A to the mass of the water-soluble (meth)acrylic resin B may be 95/5 to 85/15.
<10> A method for manufacturing a laminated core according to an aspect of the present disclosure is a method for manufacturing the laminated core according to <6>, the method including:
   a punching step of punching the adhesive surface-coated electrical steel sheet to obtain a punched member;
   a laminating step of laminating a plurality of the punched members to obtain a laminated body; and
   a bonding step of heating the laminated body to a pressurizing temperature within a temperature range of 200°C to 300°C, retaining the laminated body within a range from (drying temperature - 10°C) to the drying temperature for 30 to 60 minutes while applying a pressurizing force of 0.5 to 10 MPa, and curing the adhesive coating, to form the cured coating.

### Advantageous Effects of Invention

According to the above-described aspects of the present disclosure, provided are an adhesive surface-coated electrical steel sheet having excellent adhesion strength at ambient temperature and high temperature, and excellent magnetic characteristics, a laminated core using the same, and methods for manufacturing those.

### BRIEF DESCRIPTION OF DRAWINGS

[FIG. 1] A schematic diagram illustrating an example of an adhesive surface-coated electrical steel sheet according to the present disclosure.
[FIG. 2] A schematic diagram illustrating an example of a laminated core of the present disclosure.

### DESCRIPTION OF EMBODIMENTS

Hereinafter, the present disclosure will be described.

Although the description of the requirements described below may be made based on representative embodiments of the present disclosure, the present disclosure is not limited to such embodiments and can be implemented with appropriate modifications within the scope of the object of the present disclosure.

In the present disclosure, a numerical value range indicated by using "to" means a range including the numerical values described before and after "to" as a lower limit and an upper limit, respectively.

In the numerical value ranges described in a stepwise manner in the present disclosure, an upper limit or a lower limit described in a certain numerical value range may be replaced with an upper limit or a lower limit of another stepwise-described numerical value range. In addition, in the numerical value ranges described in the present disclosure, the upper or lower limit described in a certain numerical value range may be replaced with a value indicated in Examples.

In the present disclosure, a combination of two or more preferable aspects is a more preferable aspect.

In the present disclosure, in a case where a plurality of substances corresponding to components are present in a coating composition for a laminated steel sheet, the amount of each component in the coating composition for a laminated steel sheet means the total amount of the plurality of substances present in the coating composition for a laminated steel sheet, unless otherwise specified.

In the present disclosure, "(meth)acrylic monomer" means a monomer having a (meth)acryloyl group.

In the present disclosure, "(meth)acrylic resin" means a resin that contains a configurational unit derived from a (meth)acrylic monomer, with a proportion of the configurational unit derived from the (meth)acrylic monomer being 50 mass% or more.

In the present disclosure, "(meth)acrylic" is a term encompassing both "acrylic" and "methacrylic", "(meth)acrylate" is a term encompassing both "acrylate" and "methacrylate", "(meth)acryloyl" is a term encompassing both "acryloyl" and "methacryloyl", and "(meth)acrylamide" is a term encompassing both "acrylamide" and "methacrylamide".

In the present disclosure, "n-" means normal, "i-" means iso, "s-" means secondary, and "t-" means tertiary.

In the present disclosure, "mass%" and "weight%" are synonymous, and "part(s) by mass" and "part(s) by weight" are synonymous.

In the present disclosure, the term "step" includes not only an independent step but also a step that cannot be clearly distinguished from other steps as long as an intended purpose of the step can be achieved.

### [Adhesive surface-coated electrical steel sheet]

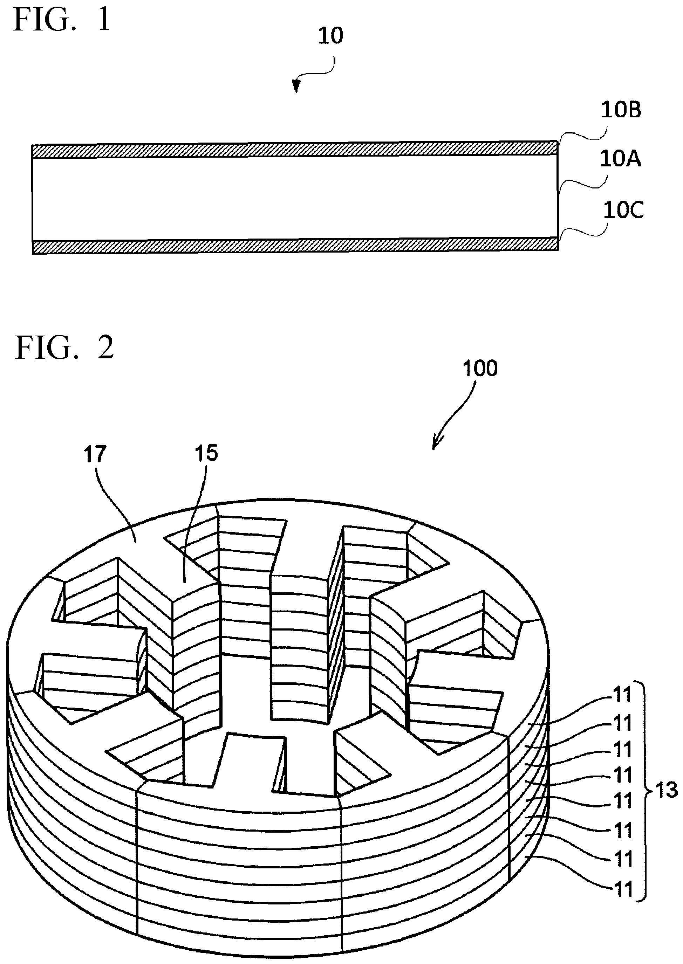

An adhesive surface-coated electrical steel sheet of the present disclosure includes an electrical steel sheet and an adhesive coating provided on at least a part of one surface or both surfaces of the electrical steel sheet (see FIG. 1).

The adhesive coating contains a (meth)acrylic resin particle A including a configurational unit derived from a monomer having a self-crosslinking group, and a water-soluble (meth)acrylic resin B, which are derived from an adhesive coating-forming coating liquid.

Then, the weight-average molecular weight of the adhesive coating is 150,000 to 250,000, and the weight-average molecular weight of the sol fraction after heating the adhesive coating at 200°C for 5 minutes is 50,000 to 100,000.

Here, in FIG. 1, 10 denotes an adhesive surface-coated electrical steel sheet, 10A denotes an electrical steel sheet, and 10B and 10C denote adhesive coatings.

By virtue of the above-described configuration, the adhesive surface-coated electrical steel sheet of the present disclosure is excellent in all of external appearance, adhesion strength at ambient temperature and high temperature, and magnetic characteristics (also excellent in magnetic characteristics as a laminated core). Note that, in the present disclosure, the "ambient temperature" refers to 25°C, and the "high temperature" refers to 150°C.

The reason is presumed as follows. By applying the (meth)acrylic resin particle A having a self-crosslinking group, the rigidity of molecular chains is improved, and excellent adhesion strength is achieved from ambient temperature to high temperature. In addition, by applying the water-soluble (meth)acrylic resin B and setting the molecular weight within the above-described range, compressive stress is relaxed, and excellent magnetic characteristics are achieved.

Hereinafter, the adhesive surface-coated electrical steel sheet (the adhesive-coated electrical steel sheet) of the present disclosure will be described in detail.

### (Electrical Steel Sheet)

The electrical steel sheet is a steel sheet on which the adhesive coating is to be formed, and is not particularly limited.

The electrical steel sheet may be a non-oriented electrical steel sheet or a grain-oriented electrical steel sheet.

Specifically, as the electrical steel sheet, for example, it is possible to use a non-oriented electrical steel strip as defined in JIS C 2552:2014, a grain-oriented electrical steel strip as defined in JIS C 2553:2019, or a non-oriented or grain-oriented thin electrical steel strip as defined in JIS C 2558:2021, each of which is cut to a predetermined length.

### (Adhesive coating)

The adhesive coating is provided on at least a part of one or both surfaces of the electrical steel sheet (see FIG. 1). That is, the adhesive coating may be provided, for example, over the entirety of one surface or each of both surfaces of the electrical steel sheet, or may be provided on one surface or each of both surfaces of the electrical steel sheet in a pattern, such as a staggered arrangement (an arrangement alternately shifted in the vertical and horizontal directions).

However, the adhesive coating is preferably provided in an area of 60% or more, 80% or more, or 100% with respect to an area of one surface of the electrical steel sheet.

### [Weight-Average Molecular Weights of Adhesive coating and Sol Fraction of Adhesive coating]

The weight-average molecular weight of the adhesive coating is 150,000 to 250,000.

When the weight-average molecular weight of the adhesive coating is less than 150,000, sufficient adhesion strength cannot be ensured. In addition, the external appearance deteriorates.

When the weight-average molecular weight of the adhesive coating is more than 250,000, the adhesive coating becomes too hard, and the magnetic characteristics deteriorate.

Therefore, the weight-average molecular weight of the adhesive coating is set within the above-described range. The weight-average molecular weight of the adhesive coating is preferably 170,000 or more, and more preferably 180,000 or more. The weight-average molecular weight of the adhesive coating is preferably 230,000 or less, and more preferably 220,000 or less.

The weight-average molecular weight of the adhesive coating can be adjusted to a desired value by controlling factors such as the polymerization temperature, polymerization time, type and use amount of polymerization initiator, and type and use amount of chain transfer agent during the production of each resin.

Here, the "weight-average molecular weight of the adhesive coating" refers to a weight-average molecular weight of the adhesive coating in a state where no treatment such as heating has been applied. Hereinafter, the weight-average molecular weight of the adhesive coating may also be referred to as the "weight-average molecular weight before heating the adhesive coating".

The weight-average molecular weight (hereinafter, also referred to as "weight-average molecular weight of the sol fraction after heating the adhesive coating") of the sol fraction after heating the adhesive coating at 200°C for 5 minutes is 50,000 to 100,000.

When the weight-average molecular weight of the sol fraction after heating the adhesive coating is 100,000 or more, sufficient adhesion strength cannot be ensured. In particular, the adhesive coating is soft, and the adhesion strength at high temperature is deteriorated.

When the weight-average molecular weight of the sol fraction after heating the adhesive coating is less than 50,000, gelation proceeds, the adhesive coating becomes too hard, and the magnetic characteristics are deteriorated.

Therefore, the weight-average molecular weight of the sol fraction after heating the adhesive coating is set within the above-described range. The weight-average molecular weight of the sol fraction after heating the adhesive coating is preferably 60,000 or more, and more preferably 70,000 or more. The weight-average molecular weight of the sol fraction after heating the adhesive coating is preferably 90,000 or less.

The weight-average molecular weight of the sol fraction after heating the adhesive coating can be adjusted to a desired value by controlling factors such as the polymerization temperature, polymerization time, type and use amount of polymerization initiator, and type and use amount of chain transfer agent during the production of each resin.

The weight-average molecular weight (Mw) before heating the adhesive coating and the weight-average molecular weight (Mw) of the sol fraction after heating the adhesive coating are measured as follows.

First, a solution A for measuring Mw before heating the adhesive coating is obtained as follows. An adhesive coating piece is collected from an adhesive surface-coated electrical steel sheet to be measured.

On the other hand, a solution B for measuring Mw of the sol fraction after heating the adhesive coating is obtained as follows. The adhesive surface-coated electrical steel sheet to be measured is heated to a steel sheet surface temperature of 200°C, and heated for 5 minutes after the steel sheet surface temperature reaches 200°C. Thereafter, the adhesive surface-coated electrical steel sheet is cooled to room temperature (25°C). An adhesive coating piece is collected from the heated the adhesive surface-coated electrical steel sheet.

The weight-average molecular weight is measured according to the following (1) to (2) using the solution A for measuring Mw before heating the adhesive coating and the solution B for measuring Mw of the sol fraction after heating the adhesive coating.
(1) The adhesive coating piece obtained above and tetrahydrofuran is used to obtain a sample solution having a solid content concentration of 0.2 mass%. Note that the "solid content concentration" as used herein means the mass ratio of the resin or sol fraction in the sample solution.
(2) Using gel permeation chromatography (GPC), the weight-average molecular weights of the sol fractions before and after heating the adhesive coating are measured as standard polystyrene equivalent values under the following conditions.

### ~Conditions~

Measuring instrument: High-speed GPC [Model: HLC-8220 GPC, manufactured by Tosoh Corporation]
Detector: Refractive index detector (RI) [built into HLC-8220, manufactured by Tosoh Corporation]
Columns: Using four TSKgel GMH_{XL} columns (manufactured by Tosoh Corporation)
Column temperature: 40°C
Eluent: Tetrahydrofuran
Injection amount of sample solution: 100 µL
Flow rate: 0.8 mL/min

### (Average Thickness of Adhesive coating)

The average thickness of the adhesive coating is preferably 1.0 to 6.0 µm. The average thickness of the adhesive coating is more preferably 1.5 µm or more or 2.0 µm or more. In addition, the average thickness of the adhesive coating is more preferably 4.0 µm or less or 3.0 µm or less.

In the adhesive surface-coated electrical steel sheet according to the present disclosure, even in a case where the average thickness of the adhesive coating is reduced to 1.0 to 6.0 µm, the adhesion strength at ambient temperature and high temperature, and the magnetic characteristics are all excellent.

The method for measuring the average thickness of the adhesive coating is as follows.

The adhesive surface-coated electrical steel sheet to be measured is cut along a thickness direction to obtain a test piece in which a cut surface is an observed section.

The observed section of the test piece is observed by a scanning electron microscope (SEM), and the thicknesses of the adhesive coating at any three locations are measured. Then, the average thickness of the adhesive coating is obtained by arithmetically averaging the thicknesses of the adhesive coating at the three locations. Note that the adhesive coating and the electrical steel sheet can be easily distinguished by observing a backscattered electron image, based on differences in brightness. The layer located at the center in the thickness direction is regarded as the electrical steel sheet, and the layers present on the front and back sides in the thickness direction are regarded as the adhesive coatings.

### (Components of Adhesive coating)

The adhesive coating contains a (meth)acrylic resin particle A (hereinafter, also referred to as a "specific (meth)acrylic resin particle A") containing a configurational unit derived from a monomer having a self-crosslinking group, and a water-soluble (meth)acrylic resin B.

The adhesive coating is an insulating coating film that develops adhesiveness by curing as a result of progress of crosslinking of at least the specific (meth)acrylic resin particle A through heating and pressing.

### [Specific (Meth)Acrylic Resin Particle A]

The specific (meth)acrylic resin particle A contains a configurational unit derived from a monomer having a self-crosslinking group, and specifically, the specific (meth)acrylic resin particle A contains a configurational unit derived from a monomer having a carboxy group and a configurational unit derived from a monomer having a self-crosslinking group.

The adhesive coating may contain only one type of the specific (meth)acrylic resin particle A, or may contain two or more types thereof.

### <Configurational Unit Derived From Monomer Having Carboxy Group>

The specific (meth)acrylic resin particle A preferably contains a configurational unit derived from a monomer having a carboxy group in a proportion of 1 mass% or more and less than 20 mass% with respect to all configurational units.

In the present disclosure, the "configurational unit derived from a monomer having a carboxy group" means a configurational unit formed by addition polymerization of a monomer having a carboxy group.

Examples of the monomer having a carboxy group include a monomer having at least one carboxy group and an ethylenically unsaturated group in one molecule.

The ethylenically unsaturated group is not particularly limited, and examples thereof include a vinyl group, an allyl group, a vinylphenyl group, a (meth)acrylamide group, and a (meth)acryloyl group.

The ethylenically unsaturated group is preferably a (meth)acryloyl group.

Specific examples of the monomer having a carboxy group include (meth)acrylic acid, crotonic acid, maleic acid, fumaric acid, itaconic acid, glutaconic acid, citraconic acid, ω-carboxy-polycaprolactone mono(meth)acrylate [for example, ω-carboxy-polycaprolactone (n ≈ 2) monoacrylate], and succinic acid derivatives (for example, 2-acryloyloxyethyl-succinic acid).

As the monomer having a carboxy group, a (meth)acrylic monomer having a carboxy group is preferable, (meth)acrylic acid is more preferable, and methacrylic acid is still more preferable.

The specific (meth)acrylic resin particle A may contain only one type of the configurational unit derived from a monomer having a carboxy group, or may contain two or more types thereof.

The amount of the configurational unit derived from a monomer having a carboxy group in the specific (meth)acrylic resin particle A is preferably 1 mass% or more and less than 20 mass% with respect to all configurational units of the specific (meth)acrylic resin particle A.

When the amount of the configurational unit derived from a monomer having a carboxy group in the specific (meth)acrylic resin particle A is 1 mass% or more with respect to all configurational units of the specific (meth)acrylic resin particle A, external appearance, adhesion strength, and magnetic characteristics all tend to be excellent. From such a viewpoint, the amount of the configurational unit derived from a monomer having a carboxy group in the specific (meth)acrylic resin particle A is preferably 3 mass% or more, more preferably 5 mass% or more, still more preferably 8 mass% or more, and particularly preferably 10 mass% or more with respect to all configurational units of the specific (meth)acrylic resin particle A.

### <Configurational Unit Derived From Monomer Having Self-Crosslinking Group>

The specific (meth)acrylic resin particle A preferably contains a configurational unit derived from a monomer having a self-crosslinking group in a proportion of 0.1 mass% or more and 7 mass% or less with respect to all configurational units.

In the present disclosure, the "configurational unit derived from a monomer having a self-crosslinking group" means a configurational unit formed by addition polymerization of a monomer having a self-crosslinking group.

In the present disclosure, "self-crosslinkability" means a property of being capable of crosslinking even in the absence of a crosslinking agent.

The self-crosslinking group in the present disclosure can develop self-crosslinkability by heating.

The temperature at which the self-crosslinking group develops self-crosslinkability varies depending on the type of the self-crosslinking group.

The self-crosslinking group is only sufficient to develop self-crosslinkability at a temperature at which the electrical steel sheets are bonded to each other, and the temperature at which the self-crosslinking group develops self-crosslinkability is not particularly limited.

Specific examples of the self-crosslinking group include an N-methylol group, an N-butylol group, a glycidyl group, and an alkoxymethylamide group.

As the self-crosslinking group, at least one selected from the group consisting of an N-methylol group, an N-butylol group, and a glycidyl group is preferable.

Specific examples of the monomer having a self-crosslinking group include N-hydroxyalkyl (meth)acrylamide, N,N-dihydroxyalkyl (meth)acrylamide, glycidyl (meth)acrylate, and N-alkoxymethyl (meth)acrylamide.

Examples of the N-hydroxyalkyl (meth)acrylamide include N-methylol acrylamide (NMAM), N-butylol acrylamide (NBMA), and hydroxyethyl acrylamide (HEAA).

Examples of the N,N-dihydroxyalkyl (meth)acrylamide include dimethylol (meth)acrylamide.

Examples of the N-alkoxymethyl (meth)acrylamide include N-methoxymethyl (meth)acrylamide, N-ethoxymethyl (meth)acrylamide, and N-butoxymethyl (meth)acrylamide.

As the monomer having a self-crosslinking group, at least one selected from the group consisting of N-methylol acrylamide (NMAM), N-butylol acrylamide (NBMA), and hydroxyethyl acrylamide (HEAA) is preferable, and hydroxyethyl acrylamide (HEAA) is more preferable.

The specific (meth)acrylic resin particle A may contain only one type of the configurational unit derived from a monomer having a self-crosslinking group, or may contain two or more types thereof.

The amount of the configurational unit derived from a monomer having a self-crosslinking group in the specific (meth)acrylic resin particle A is preferably 0.1 mass% or more and 7 mass% or less with respect to all configurational units of the specific (meth)acrylic resin particle A.

In one embodiment, the amount of the configurational unit derived from a monomer having a self-crosslinking group in the specific (meth)acrylic resin particle A may be in a range of 0.1 mass% or more and 6 mass% or less, may be in a range of 0.1 mass% or more and 5 mass% or less, may be in a range of 1 mass% or more and 7 mass% or less, may be in a range of 1.5 mass% or more and 6 mass% or less, or may be in a range of 1.9 mass% or more and 5 mass% or less.

### <Configurational Unit Derived From Alkyl (Meth)Acrylate Monomer>

The specific (meth)acrylic resin particle A preferably contains a configurational unit derived from an alkyl (meth)acrylate monomer.

In the present disclosure, the "configurational unit derived from an alkyl (meth)acrylate monomer" means a configurational unit formed by addition polymerization of an alkyl (meth)acrylate monomer. Note that the "alkyl (meth)acrylate monomer" in the specific (meth)acrylic resin particle A excludes a monomer corresponding to a monomer having a carboxy group and a monomer corresponding to a monomer having a self-crosslinking group.

The type of the alkyl (meth)acrylate monomer is not particularly limited.

The alkyl (meth)acrylate monomer may be an alkyl acrylate monomer or may be an alkyl methacrylate monomer.

The alkyl group of the alkyl (meth)acrylate monomer may be unsubstituted or may have a substituent (provided that a carboxy group, a self-crosslinking group, and a hydroxy group are excluded), and is preferably unsubstituted.

The alkyl group of the alkyl (meth)acrylate monomer may be any of linear, branched, or cyclic.

The number of carbon atoms of an alkyl group of the alkyl (meth)acrylate monomer is, for example, preferably 1 to 18, more preferably 1 to 12, and still more preferably 1 to 8.

Specific examples of the alkyl (meth)acrylate monomer include methyl (meth)acrylate, ethyl (meth)acrylate, n-butyl (meth)acrylate, i-butyl (meth)acrylate, s-butyl (meth)acrylate, t-butyl (meth)acrylate, n-octyl (meth)acrylate, i-octyl (meth)acrylate, 2-ethylhexyl (meth)acrylate, n-nonyl (meth)acrylate, i-nonyl (meth)acrylate, n-decyl (meth)acrylate, stearyl (meth)acrylate, lauryl (meth)acrylate, cyclohexyl (meth)acrylate, and isobornyl (meth)acrylate.

As the alkyl (meth)acrylate monomer, at least one selected from the group consisting of n-butyl acrylate, methyl methacrylate, and 2-ethylhexyl acrylate is preferable.

### <Configurational Unit Derived From Other Monomer>

The specific (meth)acrylic resin particle A may contain a configurational unit derived from a monomer that does not correspond to any of a monomer having a carboxy group, a monomer having a self-crosslinking group, and an alkyl (meth)acrylate monomer (so-called "other monomer").

In the present disclosure, the "configurational unit derived from other monomer" means a configurational unit formed by addition polymerization of other monomer.

Examples of the configurational unit derived from other monomer include a configurational unit derived from styrene. When the specific (meth)acrylic resin particle A contains a configurational unit derived from styrene, glossiness can be imparted to the formed adhesive coating.

In addition, examples of the configurational unit derived from other monomer include a configurational unit derived from a (meth)acrylate having an aromatic ring typified by benzyl (meth)acrylate and phenoxyethyl (meth)acrylate; a configurational unit derived from an alkoxyalkyl (meth)acrylate typified by methoxyethyl (meth)acrylate and ethoxyethyl (meth)acrylate; a configurational unit derived from a vinyl cyanide typified by acrylonitrile and methacrylonitrile; and a configurational unit derived from a vinyl ester typified by vinyl formate, vinyl acetate, vinyl propionate, and vinyl versatate.

In a case of containing the configurational unit derived from other monomer, the specific (meth)acrylic resin particle A may contain only one type of the configurational unit derived from other monomer, or may contain two or more types thereof.

In the case where the specific (meth)acrylic resin particle A contains the configurational unit derived from other monomer, the amount of the configurational unit derived from other monomer can be appropriately set within a range that does not impair the effects of the coating composition of the present disclosure.

### <<Amount of Specific (Meth)Acrylic Resin Particle A>>

The amount of the specific (meth)acrylic resin particle A is not particularly limited, and is, for example, preferably 85 mass% to 95 mass%, more preferably 87 mass% to 93 mass%, and still more preferably 89 mass% to 91 mass% with respect to the adhesive coating.

### [Water-Soluble (Meth)Acrylic Resin B]

The adhesive coating contains the water-soluble (meth)acrylic resin B.

The adhesive coating may contain only one type of the water-soluble (meth)acrylic resin B, or may contain two or more types thereof.

Here, the "water-soluble (meth)acrylic resin" is a (meth)acrylic resin having a solubility in water at 25°C of 50 mg or more per 100 g of water.

### <Configurational Unit Derived From Monomer Having Self-Crosslinking Group>

The water-soluble (meth)acrylic resin B may contain a configurational unit derived from a monomer having a self-crosslinking group.

When the water-soluble (meth)acrylic resin B contains the configurational unit derived from a monomer having a self-crosslinking group, the adhesion strength at high temperature tends to be excellent.

Note that the water-soluble (meth)acrylic resin B may not contain the configurational unit derived from a monomer having a self-crosslinking group. That is, the water-soluble (meth)acrylic resin B may be a non-crosslinkable resin.

Specific examples of the self-crosslinking group in the water-soluble (meth)acrylic resin B are the same as the specific examples of the self-crosslinking group in the specific (meth)acrylic resin particle A.

As the self-crosslinking group, at least one selected from the group consisting of an N-methylol group, an N-butylol group, and a glycidyl group is preferable.

Specific examples of the monomer having a self-crosslinking group in the water-soluble (meth)acrylic resin B are the same as the specific examples of the monomer having a self-crosslinking group in the specific (meth)acrylic resin particle A.

As the monomer having a self-crosslinking group, at least one selected from N-methylol acrylamide (NMAM) and hydroxyethyl acrylamide (HEAA) is preferable.

In a case of containing a configurational unit derived from a monomer having a self-crosslinking group, the water-soluble (meth)acrylic resin B may contain only one type of the configurational unit derived from a monomer having a self-crosslinking group, or may contain two or more types thereof.

In a case where the water-soluble (meth)acrylic resin B contains the configurational unit derived from a monomer having a self-crosslinking group, the amount of the configurational unit derived from a monomer having a self-crosslinking group is not particularly limited, and is, for example, preferably 0.1 mass% to 10.0 mass%, more preferably 1.0 mass% to 5.0 mass%, and still more preferably 1.5 mass% to 2.0 mass% with respect to all configurational units of the water-soluble (meth)acrylic resin B.

When the amount of the configurational unit derived from a monomer having a self-crosslinking group in the water-soluble (meth)acrylic resin B is within the above-described range with respect to all configurational units of the water-soluble (meth)acrylic resin B, the formed adhesive coating tends to exhibit higher adhesion strength under high-temperature conditions when electrical steel sheets are firmly fixed to each other.

### <Configurational Unit Derived From Monomer Having Hydroxy Group>

It is preferable that the water-soluble (meth)acrylic resin B contains a configurational unit derived from a monomer having a hydroxy group.

In the present disclosure, the "configurational unit derived from a monomer having a hydroxy group" means a configurational unit formed by addition polymerization of a monomer having a hydroxy group. Note that, in the present disclosure, a hydroxy group constituting part of a self-crosslinking group is not included among hydroxy groups in a monomer having a hydroxy group.

Examples of the monomer having a hydroxy group include monomers having, in one molecule, at least one hydroxy group and an ethylenically unsaturated group.

The ethylenically unsaturated group is not particularly limited, and examples thereof include a vinyl group, an allyl group, a vinylphenyl group, a (meth)acrylamide group, and a (meth)acryloyl group.

The ethylenically unsaturated group is preferably a (meth)acryloyl group.

Specific examples of the monomer having a hydroxy group include 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, 12-hydroxylauryl (meth)acrylate, 3-methyl-3-hydroxybutyl (meth)acrylate, 1,1-dimethyl-3-hydroxybutyl (meth)acrylate, 1,3-dimethyl-3-hydroxybutyl (meth)acrylate, 2,2,4-trimethyl-3-hydroxypentyl (meth)acrylate, 2-ethyl-3-hydroxyhexyl (meth)acrylate, glycerin mono(meth)acrylate, polypropylene glycol mono(meth)acrylate, polyethylene glycol mono(meth)acrylate, and poly(ethylene glycol-propylene glycol) mono(meth)acrylate.

As the monomer having a hydroxy group, a hydroxyalkyl (meth)acrylate is preferable, a hydroxyalkyl (meth)acrylate having a hydroxyalkyl group with 2 to 4 carbon atoms is more preferable, 2-hydroxyethyl (meth)acrylate is still more preferable, and 2-hydroxyethyl methacrylate is particularly preferable.

In a case of containing a configurational unit derived from a monomer having a hydroxy group, the water-soluble (meth)acrylic resin B may contain only one type of the configurational unit derived from a monomer having a hydroxy group, or may contain two or more types thereof.

In the case where the water-soluble (meth)acrylic resin B contains the configurational unit derived from a monomer having a hydroxy group, the amount of the configurational unit derived from a monomer having a hydroxy group is not particularly limited, and is, for example, preferably 5 mass% to 30 mass%, more preferably 10 mass% to 25 mass%, and still more preferably 15 mass% to 25 mass% with respect to all configurational units of the water-soluble (meth)acrylic resin B.

When the amount of the configurational unit derived from a monomer having a hydroxy group in the water-soluble (meth)acrylic resin B is 5 mass% or more with respect to all configurational units of the water-soluble (meth)acrylic resin B, external appearance, adhesion strength, and magnetic characteristics all tend to be excellent.

When the amount of the configurational unit derived from a monomer having a hydroxy group in the water-soluble (meth)acrylic resin B is 30 mass% or less with respect to all configurational units of the water-soluble (meth)acrylic resin B, the production stability of the water-soluble (meth)acrylic resin B tends to be more excellent.

### <Configurational Unit Derived From Alkyl (Meth)Acrylate Monomer>

The water-soluble (meth)acrylic resin B preferably contains a configurational unit derived from an alkyl (meth)acrylate monomer.

Note that, the "alkyl (meth)acrylate monomer" excludes a monomer corresponding to a monomer having a self-crosslinking group, and a monomer corresponding to a monomer having a hydroxy group.

The type of the alkyl (meth)acrylate monomer is not particularly limited.

The alkyl (meth)acrylate monomer may be an alkyl acrylate monomer or may be an alkyl methacrylate monomer.

The alkyl group of the alkyl (meth)acrylate monomer may be unsubstituted or may have a substituent (provided that a carboxy group, a self-crosslinking group, and a hydroxy group are excluded), and is preferably unsubstituted.

The alkyl group of the alkyl (meth)acrylate monomer may be any of linear, branched, or cyclic.

The number of carbon atoms of the alkyl group of the alkyl (meth)acrylate monomer is, for example, preferably 1 to 12, more preferably 1 to 8, and still more preferably 1 to 4.

Specific examples of the alkyl (meth)acrylate monomer in the water-soluble (meth)acrylic resin B are the same as the specific examples of the alkyl (meth)acrylate monomer in the specific (meth)acrylic resin particle (A).

The alkyl (meth)acrylate monomer preferably contains, for example, at least one selected from the group consisting of n-butyl acrylate, methyl methacrylate, and ethyl acrylate from the viewpoint of water solubility, more preferably contains at least one selected from methyl methacrylate and ethyl acrylate, and still more preferably contains methyl methacrylate.

In a case of containing a configurational unit derived from an alkyl (meth)acrylate monomer, the water-soluble (meth)acrylic resin B may contain only one type of the configurational unit derived from an alkyl (meth)acrylate monomer, or may contain two or more types thereof.

In the case where the water-soluble (meth)acrylic resin B contains the configurational unit derived from an alkyl (meth)acrylate monomer, the amount of the configurational unit derived from an alkyl (meth)acrylate monomer is not particularly limited, and is, for example, preferably 40 mass% to 90 mass%, more preferably 40 mass% to 80 mass%, and still more preferably 40 mass% to 70 mass% with respect to all configurational units of the water-soluble (meth)acrylic resin B.

### <Configurational Unit Derived From Other Monomer>

The water-soluble (meth)acrylic resin B may contain a configurational unit derived from a monomer (so-called other monomer) that does not correspond to any of a monomer having a self-crosslinking group, a monomer having a hydroxy group, and an alkyl (meth)acrylate monomer.

Examples of the configurational unit derived from other monomer include a configurational unit derived from a (meth)acrylate having an aromatic ring typified by benzyl (meth)acrylate and phenoxyethyl (meth)acrylate; a configurational unit derived from an alkoxyalkyl (meth)acrylate typified by methoxyethyl (meth)acrylate and ethoxyethyl (meth)acrylate; a configurational unit derived from a vinyl cyanide typified by acrylonitrile and methacrylonitrile; and a configurational unit derived from a vinyl ester typified by vinyl formate, vinyl acetate, vinyl propionate, and vinyl versatate.

In a case of containing the configurational unit derived from other monomer, the water-soluble (meth)acrylic resin B may contain only one type of the configurational unit derived from other monomer, or may contain two or more types thereof.

In the case where the water-soluble (meth)acrylic resin B contains the configurational unit derived from other monomer, the amount of the configurational unit derived from other monomer can be appropriately set within a range that does not impair the effects of the coating composition of the present disclosure.

### <<Amount of Water-Soluble (Meth)Acrylic Resin B>>

The amount of the water-soluble (meth)acrylic resin B in the adhesive coating is preferably such that the ratio of the mass of the specific (meth)acrylic resin particle A to the mass of the water-soluble (meth)acrylic resin B [mass of specific (meth)acrylic resin particle A/mass of water-soluble (meth)acrylic resin B] is 95/5 to 85/15.

When the ratio of the mass of the specific (meth)acrylic resin particle A to the mass of the water-soluble (meth)acrylic resin B is 95/5 to 85/15, external appearance, adhesion strength, and magnetic characteristics all tend to be excellent. From these viewpoints, the ratio of the mass of the specific (meth)acrylic resin particle A to the mass of the water-soluble (meth)acrylic resin B is preferably 95/5 to 90/10.

### [Other Components]

The adhesive coating may contain components other than the components described above (so-called other components) as necessary, within a range that does not impair the effects thereof.

Regarding the adhesive coating in the adhesive surface-coated electrical steel sheet or the laminated core obtained by laminating the adhesive surface-coated electrical steel sheets, the component ratio can be estimated by performing qualitative analysis of the contained components using infrared spectroscopy, nuclear magnetic resonance, or gas chromatography, and then performing weight distribution of fragments by TOFMS.

An analytical sample of the adhesive surface-coated electrical steel sheet can be collected by cutting out the coating portion with a precision cutter. In the case of the laminated core, several electrical steel sheets are peeled off from the laminated core, and the sample is then collected by the above-described method.

### (Method For Manufacturing Adhesive surface-coated electrical steel sheet)

### (Method For Forming Adhesive coating)

The adhesive surface-coated electrical steel sheet of the present disclosure exhibits the effects thereof as long as it has the above-described features regardless of the manufacturing method, and can be obtained, for example, by a manufacturing method including the following steps:
(I) a coating step of coating at least a part of one surface or both surfaces of an electrical steel sheet with an adhesive coating-forming coating liquid to obtain a coated steel sheet; and
(II) a coating-forming step of heating the coated steel sheet at a heating rate of 6.0°C/sec or less to a drying temperature of 100 to 200°C, retaining the coated steel sheet within a temperature range from (drying temperature - 10°C) to the drying temperature for 10 to 90 seconds, and drying the coated steel sheet, to form an adhesive coating on the one surface or each of the both surfaces of the electrical steel sheet.

Note that, in the present disclosure, in a case where a plurality of substances corresponding to each component are present in the adhesive coating-forming coating liquid, the amount of each component in the adhesive coating-forming coating liquid means, unless otherwise specified, the total amount of the plurality of substances present in the adhesive coating-forming coating liquid.

Each step will be described.

### -Coating Step-

In the coating step, a coated steel sheet is obtained by coating at least a part of one surface or both surfaces of an electrical steel sheet with an adhesive coating-forming coating liquid (hereinafter, also referred to as a "coating liquid of the present disclosure" or a "coating composition of the present disclosure").

The coating liquid (coating composition) of the present disclosure contains the (meth)acrylic resin particle A, the water-soluble (meth)acrylic resin B, and a medium containing water.

In the coating liquid of the present disclosure, the specific (meth)acrylic resin particle A is present in a state of being dispersed in the medium containing water.

In addition, the water-soluble (meth)acrylic resin B is present in a state of being dissolved in the medium containing water.

By coating with such a coating liquid and then drying, the above-described adhesive coating according to the present embodiment can be obtained.

### [Water]

The coating liquid of the present disclosure contains water.

The type of water is not particularly limited.

As the water, for example, distilled water, deionized water (also referred to as "ion-exchanged water"), and pure water are preferable from the viewpoint of containing fewer impurities.

The water content in the coating liquid of the present disclosure is not particularly limited, and is, for example, preferably 35 mass% to 50 mass%, and more preferably 40 mass% to 45 mass%, with respect to the total mass of the coating composition.

### [Other Components]

The coating liquid of the present disclosure may contain components other than the components described above (so-called other components) as necessary, within a range that does not impair the effects thereof.

Examples of the other components include an aqueous medium other than water.

Examples of the aqueous medium other than water include a water-miscible organic solvent.

Examples of the water-miscible organic solvent include organic solvents such as monohydric alcohol compounds such as methanol and ethanol; polyhydric alcohol compounds such as glycerin, ethylene glycol, and propylene glycol; and glycol derivatives such as ethylene glycol monoethyl ether and propylene glycol monobutyl ether.

In addition, examples of the other components include various additives such as a preservative, a wetting agent, and an antifoaming agent.

### (Method for Manufacturing Coating Liquid)

The method for manufacturing the coating liquid of the present disclosure is not particularly limited.

The coating liquid of the present disclosure can be manufactured, for example, by mixing a dispersion of the specific (meth)acrylic resin particle A and an aqueous solution of the water-soluble (meth)acrylic resin B.

The mixing method is not particularly limited.

Examples of the mixing method include a method of mixing by stirring.

For the stirring, a general stirring instrument or a stirring device can be used.

The stirring temperature is not particularly limited, and is, for example, preferably 20°C to 30°C.

### -Step of Forming Adhesive coating-

In the coating-forming step, the electrical steel sheet coated with the coating liquid (coated steel sheet) is heated at a heating rate of 6.0°C/sec or lower to a drying temperature (maximum temperature reached by the material) of 100°C to 200°C, and retained within a temperature range from (drying temperature - 10°C) to the drying temperature for 10 to 90 seconds, thereby carrying out drying, to form an adhesive coating on a surface of the electrical steel sheet.

The drying time (the time during which the material temperature is held within a temperature range from (drying temperature - 10°C) to the drying temperature) is preferably 30 to 60 seconds. The temperature rising rate is calculated from the time until the drying temperature (maximum temperature reached by the material) is reached.

When the drying temperature is higher than 200°C, there is a concern that the resin is oxidized. When the drying temperature is lower than 100°C or the drying time is shorter than 10 seconds, drying is not sufficiently carried out.

On the other hand, when the drying time is more than 90 seconds, productivity is poor.

In addition, when the temperature rising rate is more than 6.0°C/sec, a coating is not suitably formed, resulting in insufficient adhesion strength. In general, it is considered that decreasing the temperature rising rate necessitates increasing the furnace length or decreasing the line speed, which is unfavorable in terms of equipment constraints and productivity. However, in the method for manufacturing an adhesive surface-coated electrical steel sheet according to the present embodiment, the temperature rising rate is intentionally slowed down based on a new finding that the above-described effects can be obtained by slowing down the temperature rising rate.

Examples of the formation of the adhesive coating using the coating liquid of the present disclosure include a method of coating a surface of the electrical steel sheet with the coating liquid by a well-known coating method such as a roll coater method or a spray method, and then carrying out drying.

The solid content concentration of the coating liquid is preferably 5 to 40 mass%, and more preferably 10 to 25 mass%.

The drying method is preferably a method utilizing a duplicate-type heating furnace, but may be a hot-blast furnace method or other methods.

### [Laminated Core]

The laminated core of the present disclosure includes a plurality of the adhesive surface-coated electrical steel sheets of the present disclosure, the adhesive surface-coated electrical steel sheet are laminated, and the electrical steel sheets are bonded to each other by a cured coating of the adhesive coating.

Here, the cured coating of the adhesive coating is a coating in which crosslinking of the (meth)acrylic resin particle A in the adhesive coating proceeds by heating and pressing the laminated the adhesive surface-coated electrical steel sheets, followed by curing to develop adhesiveness.

Specifically, examples of the laminated core of the present disclosure include a laminated core obtained by punching the adhesive surface-coated electrical steel sheet of the present disclosure to produce a punched member, laminating the punched members, and heating and pressurizing the laminated punched members to be integrated.

The laminated core of the present disclosure preferably has a space factor of 96% to 98%.

FIG. 2 is a schematic diagram illustrating an example of the laminated core of the present disclosure. As illustrated in FIG. 2, a laminated core 100 is formed as a laminated body 13 in which eight punched members 11, each formed of the adhesive surface-coated electrical steel sheet, are connected in a ring shape, and the punched members 11 connected in the ring shape are laminated into eight layers and integrated.

The punched members 11, each formed of the adhesive surface-coated electrical steel sheet, are obtained by subjecting the adhesive surface-coated electrical steel sheets to punch processing, and includes an arcuate yoke portion 17 and a tooth portion 15 that protrudes radially inward from the inner circumferential surface of the yoke portion 17.

Note that the laminated core 100 is not limited to the shape, number of pieces, or number of laminated layers of the punched members 11 forming the laminated core 100 illustrated in FIG. 2, and may be designed as appropriate depending on the intended purpose.

### (Method for Manufacturing Laminated Core)

The laminated core of the present disclosure is manufactured, for example, by the following steps:
(III) a punching step of punching the adhesive surface-coated electrical steel sheet to obtain a punched member;
(IV) a laminating step of laminating a plurality of the punched members to obtain a laminated body; and
(V) a bonding step of heating the laminated body to a pressurizing temperature within a temperature range of 200°C to 300°C, retaining the laminated body within a range from (pressurizing temperature - 10°C) to the pressurizing temperature for 30 to 60 minutes while applying a pressurizing force of 0.5 to 10 MPa.

Each step will be described.

### -Punching Step-

In the punching step, an adhesive surface-coated electrical steel sheet is punched to obtain a member (punched member) having a predetermined shape. The punching method is not particularly limited.

### -Laminating Step-

In the laminating step, the punched members are laminated with an adhesive coating sandwiched between the individual electrical steel sheets. Thus, a laminated body is obtained.

### -Bonding Step-

In the bonding step, the laminated body is heated to a pressurizing temperature (maximum temperature reached by the material) within a range of 200°C to 300°C, and retained within a range from (pressurizing temperature - 10°C) to the pressurizing temperature for 30 to 60 minutes while applying a pressurizing force of 0.5 to 10 MPa. As a result, the crosslinking of the (meth)acrylic resin particle A in the adhesive coating proceeds, thereby curing the adhesive coating. As a result, the cured coating of the adhesive coating develops adhesiveness, and the electrical steel sheets are bonded to each other by the cured coating of the adhesive coating.

Through these operations, the laminated core of the present disclosure is obtained.

The adhesive surface-coated electrical steel sheets may be bonded to each other in such a manner that the cured coatings of the adhesive coatings on the individual electrical steel sheets face and adhere to each other, or in such a manner that the cured coating of the adhesive coating on one electrical steel sheet faces and adheres to a surface of another electrical steel sheet on which no adhesive coating is formed.

The pressurizing temperature is preferably 200°C to 300°C, the pressurizing force is preferably 0.5 to 10 MPa, and the holding time is preferably 30 to 60 minutes.

### (Application of Laminated Core)

The laminated core of the present disclosure can be used as a core employed in a rotary electric machine and the like.

### Examples

Hereinafter, the coating composition of the present disclosure will be described in more detail with reference to examples. The present disclosure is not limited to the following examples, as long as the spirit does not depart from the gist of the disclosure.

### [Example 1]

### 1. Production of (Meth)Acrylic Resin Particle A

A stainless steel container was charged with 56 parts by mass of n-butyl acrylate (n-BA; alkyl acrylate monomer), 168 parts by mass of methyl methacrylate (MMA; alkyl methacrylate monomer), 128 parts by mass of styrene (St; other monomer), 40 parts by mass of methacrylic acid (MAA; monomer having a carboxy group), and 8 parts by mass of hydroxyethyl acrylamide (HEAA; monomer having a self-crosslinking group), followed by mixing to prepare a monomer mixture.

Next, 172.0 parts by mass of deionized water, 2.7 parts by mass of NOIGEN (registered trademark) EA-197D, nonionic surfactant [manufactured by Dai-ichi Kogyo Seiyaku Co., Ltd.], 4.1 parts by mass of EMULGEN (registered trademark) A-60 [manufactured by Kao Corporation], and 2.7 parts by mass of NEOPELEX, anionic surfactant (registered trademark) G-65 [manufactured by Kao Corporation] were added to another stainless steel container, followed by stirring to dissolve the mixture, thereby preparing a surfactant aqueous solution.

Next, the monomer mixture prepared as described above was gradually added to the surfactant aqueous solution while stirring with a stirrer to emulsify the mixture, thereby preparing a pre-emulsion. The prepared pre-emulsion was used for polymerization.

The polymerization was carried out in a 7 L (liter; hereinafter the same) flask equipped with a reflux condenser, a stirring device, a nitrogen gas inlet tube, a pump for dropwise addition of a pre-emulsion [trade name: Hi-Cera Pump V-10, manufactured by IWAKI Co., Ltd.], and a polymerization initiator feeding device [trade name: metering pump MP-2000, manufactured by Tokyo Rikakikai Co., Ltd.], in a thermostatic bath. Specifically, the polymerization was carried out as follows.

After charging the flask with 162.4 parts by mass of deionized water, a portion (17.5 parts by mass) of the pre-emulsion prepared as described above was added. Nitrogen gas was introduced into the flask at a flow rate of 300 ml/min, and while stirring at any rotation speed [standard condition: 240 rpm (revolutions per minute; the same applies to the following)], the internal temperature of the flask was raised to any reaction temperature (standard condition: 62°C). After the internal temperature was stabilized, 2.3 parts by mass of a 24 mass% ammonium persulfate aqueous solution [polymerization initiator] and 2.3 parts by mass of a 20 mass% sodium hydrogen sulfite aqueous solution [reducing agent] were added, and the flow rate of nitrogen gas was adjusted to 50 ml/min. After confirming the temperature rise inside the flask, the remaining pre-emulsion (564 parts by mass) was added dropwise over 270 minutes, and 63.4 parts by mass of a 2.4 mass% ammonium persulfate aqueous solution [polymerization initiator] and 63.4 parts by mass of a 2.0 mass% sodium hydrogen sulfite aqueous solution [reducing agent] were added dropwise over 360 minutes. After 30 minutes from the completion of dropwise addition of the ammonium peroxodisulfate aqueous solution and sodium hydrogen sulfite, 6.4 parts by mass of a 6.9 mass% t-butyl hydroperoxide aqueous solution [polymerization initiator] and 6.4 parts by mass of a 4.4 mass% sodium hydroxymethanesulfinate aqueous solution [reducing agent] were added dropwise over 30 minutes. The polymerization reaction was terminated by cooling to 30°C, 150 minutes after the completion of the dropwise addition of the pre-emulsion.

To the emulsion polymer obtained by the polymerization reaction were added 1.3 parts by mass of a preservative [trade name: Topcide 350, manufactured by Permachem Asia Ltd.] and 1.3 parts by mass of a wetting agent [trade name: SURFYNOL (registered trademark) 440, manufactured by Nissin Chemical Industry Co., Ltd.], thereby obtaining an aqueous dispersion of the (meth)acrylic resin particle A.

### 2. Production of Water-Soluble (Meth)Acrylic Resin B

A stainless steel container was charged with 126 parts by mass of methyl methacrylate [MMA; alkyl methacrylate monomer], 48 parts by mass of ethyl acrylate [EA; alkyl acrylate monomer], 60 parts by mass of acrylic acid [AA; a monomer having a carboxy group], 60 parts by mass of 2-hydroxyethyl methacrylate [2HEMA; a monomer having a hydroxy group], and 6 parts by mass of hydroxyethyl acrylamide [HEAA; a monomer having a self-crosslinking group], to prepare a monomer mixture.

Next, 121.0 parts by mass of deionized water and 4.5 parts by mass of LATEMUL (registered trademark) E-118B, anionic surfactant [manufactured by Kao Corporation] were added to another stainless steel container, followed by stirring to dissolve the mixture, thereby preparing a surfactant aqueous solution.

Next, the monomer mixture prepared as described above was gradually added to the surfactant aqueous solution while stirring with a stirrer to emulsify the mixture, thereby preparing a pre-emulsion. The prepared pre-emulsion was used for polymerization.

The polymerization was carried out in a 7 L flask equipped with a reflux condenser, a stirring device, a nitrogen gas inlet tube, a pump for dropwise addition of a pre-emulsion [trade name: Hi-Cera Pump V-10, manufactured by IWAKI Co., Ltd.], and a polymerization initiator feeding device [trade name: metering pump MP-2000, manufactured by Tokyo Rikakikai Co., Ltd.], in a thermostatic bath. Specifically, the polymerization was carried out as follows.

A flask was charged with 415 parts by mass of deionized water and 7.0 parts by mass of LATEMUL (registered trademark) E-118B, anionic surfactant [manufactured by Kao Corporation], followed by the addition of a portion (8.5 parts by mass) of the pre-emulsion prepared as described above. Nitrogen gas was introduced into the flask at a flow rate of 300 ml/min, and while stirring at any rotation speed [standard condition: 150 rpm], the internal temperature of the flask was raised to any reaction temperature [standard condition: 60°C]. Then, 1.0 part by mass of a 69.0 mass% t-butyl hydroperoxide aqueous solution [polymerization initiator] and 2.5 parts by mass of a 10.0 mass% sodium hydroxymethanesulfinate aqueous solution [reducing agent] were added. After the internal temperature was stabilized, the flow rate of nitrogen gas was adjusted to 50 ml/min. After the adjustment, the remaining pre-emulsion (456.6 parts by mass) was added dropwise over 180 minutes, together with 24.5 parts by mass of a 6.9 mass% t-butyl hydroperoxide aqueous solution [polymerization initiator], 24.5 parts by mass of a 1.2 mass% sodium hydroxymethanesulfinate aqueous solution [reducing agent], and 39.6 parts by mass of a 14.7 mass% 2-mercaptoethanol [chain transfer agent], thereby obtaining an aqueous dispersion of (meth)acrylic resin particles. To the obtained aqueous dispersion of (meth)acrylic resin particles was added 58 parts by mass of 25.0 mass% aqueous ammonia (basic aqueous solution) to dissolve the (meth)acrylic resin particles in water, thereby obtaining an aqueous solution of the water-soluble (meth)acrylic resin B.

### 3. Production of Coating Liquid (Coating Composition)

After mixing 300.0 parts by mass (137.1 parts by mass as a solid content) of the aqueous dispersion containing the (meth)acrylic resin particles A with 48.1 parts by mass (15.2 parts by mass as a solid content) of the aqueous solution of the water-soluble (meth)acrylic resin B, an appropriate amount of deionized water was added to obtain a coating liquid having a solid content concentration of 43.5 mass%.

Here, the "solid content concentration" refers to the total mass ratio of the (meth)acrylic resin particles A and the water-soluble (meth)acrylic resin B in the coating composition. The same applies to the coating liquid produced in the following.

### 4. Production of Adhesive surface-coated electrical steel sheet

First, a non-oriented electrical steel sheet having a thickness of 0.25 mm and a width of 100 mm was prepared, with compositions of Si: 3.0 mass%, Mn: 0.2 mass%, Al: 0.5 mass%, and a remainder composed of Fe and impurities.

Next, the obtained coating liquid was applied to the entirety of one surface of the electrical steel sheet, and the electrical steel sheet was then heated at a temperature rising rate of 5.0°C/sec until the reaching temperature of the surface of the steel sheet reached 170°C, and retained for 60 seconds to dry the coating, thereby forming an adhesive coating having a thickness of 3 µm.

In this way, an adhesive surface-coated electrical steel sheet was obtained.

### [Example 2 to 8 and Comparative Example 1 to 6]

A coating composition having a solid content concentration of 43.5 mass% was obtained by performing the same operations as in Example 1, except that the monomer compositions of the (meth)acrylic resin particle A and the water-soluble (meth)acrylic resin B were changed to the monomer compositions illustrated in Table 1, respectively, and the mass ratio [A/B] of the (meth)acrylic resin particle A to the water-soluble (meth)acrylic resin B was changed to the mass ratio illustrated in Table 1.

Then, the obtained coating composition was used to obtain an adhesive surface-coated electrical steel sheet in the same manner as in Example 1.

Note that, in Comparative Example 5, a coating composition that does not include the specific (meth)acrylic resin particle A was obtained.

In addition, in Comparative Example 6, a coating composition that does not include the water-soluble (meth)acrylic resin B was obtained.

### [Evaluation]

(Weight-Average Molecular Weight (Mw) Before Heating Adhesive coating and Weight-Average Molecular Weight (Mw) of Sol Fraction After Heating Adhesive coating)

The weight-average molecular weight (Mw) before heating the adhesive coating and the weight-average molecular weight (Mw) of the sol fraction after heating the adhesive coating in each example of the an adhesive surface-coated electrical steel sheet were measured according to the method described above.

### (Adhesion Strength)

Two single-sheet test pieces each having a size of 30 mm × 60 mm were cut out from the adhesive surface-coated electrical steel sheet of each example. The 30 mm × 10 mm end portions of the two single-sheet test pieces were overlapped with each other in such a manner that the adhesive coatings faced each other. The two single-sheet test pieces overlapped were heated and pressed under conditions of a pressurizing temperature of 250°C, a pressure of 2 MPa, and a holding (heating and pressing) time of 1 minute to obtain an adhesive sheet for measuring adhesion strength.

The shear adhesion strength was measured as follows, with the steel sheet temperature at ambient temperature (25°C).

### -Tensile Testing Apparatus-

· Autograph AGS-10kNX (Shimadzu Corporation)

### -Measurement Conditions-

· Tensile form: Shear tensile test
· Tensile temperature: 25°C
· Tensile speed: 50 mm/min

For the measurement, a tensile test was performed up to breakage at n = 5, and the average value of the maximum strengths up to breakage was taken as the shear bond strength.

Then, a value obtained by dividing the measured shear adhesion strength value by the adhesion area of the two single-sheet test pieces was determined as the adhesion strength at ambient temperature.

It was determined that an adhesive strength of 6.0 MPa or more indicates sufficient adhesive strength.

In addition, two single-sheet test pieces of 30 mm × 60 mm size were separately cut out from the adhesive surface-coated electrical steel sheet of each example, and an adhesive sheet obtained by overlapping end portions of 30 mm × 10 mm with the adhesive coatings facing each other was placed in an atmosphere of 150°C, and the shear adhesion strength was measured under the same conditions as those in the case of ambient temperature in a state where the steel sheet temperature was 150°C.

Then, a value obtained by dividing the measured shear adhesion strength value by the adhesion area of the two single-sheet test pieces was determined as an adhesion strength at 150°C.

It was determined that an adhesive strength of 2.0 MPa or more indicates sufficient adhesive strength.

### (Magnetic Characteristics)

Single-sheet test pieces each having a size of 55 mm × 55 mm were cut out from the adhesive surface-coated electrical steel sheet of each example. Then, the two single-sheet test pieces were overlapped with each other in such a manner that the adhesive coatings faced each other. The overlapped two single-sheet test pieces were heated and pressurized under the conditions of a pressurization temperature of 250°C, a pressure of 2 MPa, and a holding (heating and pressurizing) time of 1 minute to obtain the adhesive sheet.

Core losses in a rolling direction and an orthogonal-to-rolling direction in the obtained laminated sample were measured by methods of measurement of magnetic characteristics of a single steel sheet specified in JIS C2556:2015, and an average value of core losses W10/400 in the rolling direction and the orthogonal-to-rolling direction was determined.

It was determined that an iron loss of 10.9 W/kg or less indicates excellent magnetic characteristics. (External Appearance)

Three 5 mm square test pieces were cut out from the adhesive surface-coated electrical steel sheet of each example to obtain the test pieces.

The surface of the adhesive coating of each test piece was observed at three locations with a scanning electron microscope at a magnification of 100 times. The observation was performed for a total of 9 fields of view.

Then, evaluation was performed according to the following evaluation criteria, and A and B were determined as a pass.
A: No coating defects such as cracks, fissures, or peeling were observed at all.
B: The area ratio of coating defects was 10% or less.
C: The area ratio of coating defects was more than 10% and less than 30%.
D: The area ratio of coating defects was 30% or more.

The details of the abbreviations of each monomer described in Table 1 are as shown below.

### <Monomer Having Self-Crosslinking Group>

"NMAM": N-methylol acrylamide
"NBMA": N-butylol acrylamide
<Monomer Having Self-Crosslinking Group and Hydroxy Group>
"HEAA": Hydroxyethyl acrylamide

### <Monomer Having Carboxy Group>

"MAA": Methacrylic acid
"AA": Acrylic acid

### <Monomer Having Hydroxy Group>

"2HEMA": 2-Hydroxyethyl methacrylate

### <Alkyl (Meth)Acrylate Monomer>

"n-BA": n-Butyl acrylate
"MMA": Methyl methacrylate
"2EHA": 2-Ethylhexyl acrylate
"EA": Ethyl acrylate

### <Other Monomer>

"St": Styrene

In Table 1, blank spaces described in the columns of the monomer compositions mean that monomers corresponding to the columns are not used.

In Table 1, the numerical values described in the columns of the monomer compositions are all values on a solid-content basis (parts by mass).

**[Table 1]**

| | Monomer | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|
| (Meth)acrylic resin particle A | n-BA | 56 | | 56 | | | 56 | 56 | 56 | | | 40 | 56 | | 80 |
| | MMA | 168 | 140 | 168 | 140 | 164 | 168 | 168 | 168 | 168 | 168 | 220 | 168 | | 144 |
| | 2EHA | | 84 | | 84 | 60 | | | | 40 | 48 | | | | |
| | St | 128 | 128 | 128 | 128 | 128 | 128 | 128 | 128 | 136 | 136 | 128 | 128 | | 128 |
| | MAA | 40 | 40 | 40 | 40 | 40 | 40 | 40 | 40 | 40 | 40 | 4 | 40 | | 40 |
| | NMAM | | | | | 8 | | | 8 | | | | | | |
| | NBMA | | | 8 | | | | 8 | | 16 | 8 | | | | |
| | HEAA | 8 | 8 | | 8 | | 8 | | | | | 8 | 8 | | 8 |
| Water-soluble (meth)acrylic resin B | MMA | 126 | 126 | 126 | 126 | 132 | 126 | 126 | 126 | 126 | 126 | 126 | 126 | 126 | |
| | n-BA | | | | | 42 | 60 | | | | | | | | |
| | EA | 48 | 48 | 48 | 48 | | 54 | 48 | 48 | 48 | 48 | 48 | 48 | 48 | |
| | AA | 60 | 60 | 60 | 60 | 60 | 60 | 60 | 60 | 60 | 60 | 60 | 60 | 60 | |
| | 2HEMA | 60 | 60 | 60 | 60 | 60 | | 60 | 60 | 60 | 60 | 60 | 60 | 60 | |
| | HEAA | 6 | 6 | 6 | 6 | 6 | | 6 | 6 | 6 | 6 | 6 | 6 | 6 | |
| Mass ratio of A: B | | 90 : 10 | 90 : 10 | 95 : 5 | 85 : 15 | 90 : 10 | 90 : 10 | 97 : 3 | 80 : 20 | 65 : 35 | 70 : 30 | 90 : 10 | 95: 5 | 0 : 100 | 100 : 0 |

**[Table 2]**

| | External appearance | Adhesion strength [MPa] | | Weight-average molecular weight [X 10,000] | | Magnetic characteristic iron loss [W/kg] |
|---|---|---|---|---|---|---|
| | | Ambient temperature | 150°C | Before heating adhesive coating | Sol fraction after heating adhesive coating | W10/400 |
| Example 1 | B | 11.9 | 4.0 | 18.8 | 7.8 | 10.5 |
| Example 2 | A | 10.1 | 2.0 | 17.6 | 8.8 | 10.4 |
| Example 3 | B | 12.0 | 3.0 | 20.4 | 8.3 | 10.7 |
| Example 4 | B | 6.4 | 4.5 | 16.3 | 6.6 | 10.3 |
| Example 5 | B | 7.8 | 3.5 | 21.2 | 6.2 | 10.9 |
| Example 6 | B | 6.2 | 2.2 | 15.5 | 8.7 | 10.8 |
| Example 7 | B | 9.8 | 2.0 | 24.1 | 9.1 | 10.9 |
| Example 8 | B | 7.5 | 5.0 | 17.2 | 5.5 | 10.9 |
| Comparative Example 1 | B | 6.1 | 0.4 | 16.3 | 4.2 | 11.1 |
| Comparative Example 2 | B | 16.4 | 1.2 | 34.2 | 3.8 | 12.8 |
| Comparative Example 3 | C | 13.3 | 9.3 | 27.5 | 3.2 | 12.1 |
| Comparative Example 4 | B | 4.1 | 1.4 | 12.2 | 11.5 | 10.8 |
| Comparative Example 5 | B | 10.9 | 0.3 | 18.5 | 18.3 | 11.4 |
| Comparative Example 6 | D | 7.3 | 4.4 | 30.5 | 4.4 | 11.1 |

From the above-described results, it can be seen that the present example is excellent in external appearance, adhesion strength from ambient temperature to high temperature, and magnetic characteristics as compared with the comparative examples.

### INDUSTRIAL APPLICABILITY

According to the above-described aspects of the present disclosure, there are provided the adhesive surface-coated electrical steel sheet excellent in both adhesive strength and magnetic characteristics from ambient temperature to high temperature, the laminated core using the same, and the methods for manufacturing those.

### REFERENCE SIGNS LIST

10 Adhesive surface-coated electrical steel sheet
10A Electrical steel sheet
10B Adhesive coating
10C Adhesive coating
11 Punched member formed of adhesive surface-coated electrical steel sheet
100 Laminated core

## Claims

1. An adhesive surface-coated electrical steel sheet comprising:
an electrical steel sheet; and
an adhesive coating provided on at least a part of one surface or both surfaces of the electrical steel sheet,
wherein
the adhesive coating includes
a (meth)acrylic resin particle A containing a configurational unit derived from a monomer having a self-crosslinking group, and a water-soluble (meth)acrylic resin B, and
a weight-average molecular weight of the adhesive coating is 150,000 to 250,000.

2. The adhesive surface-coated electrical steel sheet according to claim 1, wherein a weight-average molecular weight of a sol fraction of the adhesive coating after heating the adhesive coating at 200°C for 5 minutes is 50,000 to 100,000.

3. The adhesive surface-coated electrical steel sheet according to claim 1, wherein the water-soluble (meth)acrylic resin B is a (meth)acrylic resin containing a configurational unit derived from a monomer having a self-crosslinking group.

4. The adhesive surface-coated electrical steel sheet according to claim 1, wherein a ratio of a mass of the (meth)acrylic resin particle A to a mass of the water-soluble (meth)acrylic resin B is 95/5 to 85/15.

5. The adhesive surface-coated electrical steel sheet according to claim 1, wherein the self-crosslinking group of the (meth)acrylic resin particle A is at least one selected from the group consisting of an N-methylol group, an N-butylol group, and a glycidyl group.

6. A laminated core comprising a plurality of the adhesive surface-coated electrical steel sheets according to any one of claims 1 to 5, the adhesive surface-coated electrical steel sheets being laminated, wherein the electrical steel sheets are bonded to each other by a cured coating of the adhesive coating.

7. The laminated core according to claim 6, the laminated core having a space factor of 96% to 98%.

8. A method for manufacturing the adhesive surface-coated electrical steel sheet according to claim 1, the method comprising:
a coating step of coating at least a part of one surface or both surfaces of an electrical steel sheet with an adhesive coating-forming coating liquid containing a (meth)acrylic resin particle A containing a configurational unit derived from a monomer having a self-crosslinking group and a water-soluble (meth)acrylic resin B to obtain a coated steel sheet; and
a coating-forming step of heating the coated steel sheet to a drying temperature of 100°C to 200°C at a heating rate of 6.0°C/sec or less, retaining the coated steel sheet within a temperature range from (drying temperature - 10°C) to the drying temperature for 10 to 90 seconds, and drying the coated steel sheet, to form an adhesive coating on the one surface or each of the both surfaces of the electrical steel sheet.

9. The method for manufacturing the adhesive surface-coated electrical steel sheet according to claim 8, wherein in the adhesive coating-forming coating liquid, a ratio of a mass of the (meth)acrylic resin particle A to a mass of the water-soluble (meth)acrylic resin B is 95/5 to 85/15.

10. A method for manufacturing the laminated core according to claim 6, the method comprising:
a punching step of punching the adhesive surface-coated electrical steel sheet to obtain a punched member;
a laminating step of laminating a plurality of the punched members to obtain a laminated body; and
a bonding step of heating the laminated body to a pressurizing temperature within a temperature range of 200°C to 300°C, retaining the laminated body within a range from (pressurizing temperature - 10°C) to the pressurizing temperature for 30 to 60 minutes while applying a pressurizing force of 0.5 to 10 MPa, and curing the adhesive coating, to form the cured coating.
